# EUROPEAN PATENT SPECIFICATION

(11) **EP 3 022 406 B1**
(45) Date of publication and mention of the grant of the patent: **25.09.2019**
(21) Application number: 14825748.8
(22) Date of filing: 17.06.2014
(51) Int. Cl.: F01D 25/28, F01D 5/02, F01D 9/04, F01D 5/28

(54) **GAS TURBINE ENGINE CERAMIC COMPONENT ASSEMBLY ATTACHMENT**
ANBINDUNG EINER KERAMIKKOMPONENTENBAUGRUPPE FÜR EINEN GASTURBINENMOTOR
FIXATION D'ENSEMBLE D'ÉLÉMENTS EN CÉRAMIQUE DE MOTEUR À TURBINE À GAZ

(30) Priority: 18.07.2013 US 201361847679 P
(43) Date of publication of application: 25.05.2016
(73) Proprietor: United Technologies Corporation, Farmington, CT 06032 (US)
(72) Inventor: COOK, Grant O. III, Tolland, Connecticut 06084 (US); ABBOTT, Michael G., Jupiter, FL 33458 (US); MCCAFFREY, Michael G., Windsor, Connecticut 06095 (US)
(74) Representative: Dehns
(86) International application number: PCT/US2014/042744
(87) International publication number: WO 2015/009386

(56) References cited:
- EP-A2- 1 764 481
- US-A- 5 318 406
- US-A1- 2005 254 942
- US-A1- 2005 254 942
- US-A1- 2009 196 761
- US-A1- 2011 041 313
- US-B1- 6 648 597
- US-B1- 6 648 597
- US-B2- 7 510 372
- GRANT O COOK III ET AL: "Overview of transient liquid phase and partial transient liquid phase bonding", JOURNAL OF MATERIALS SCIENCE, KLUWER ACADEMIC PUBLISHERS, BO, vol. 46, no. 16, 7 May 2011 (2011-05-07), pages 5305-5323, XP019907409, ISSN: 1573-4803, DOI: 10.1007/S10853-011-5561-1

## Description

### BACKGROUND

This disclosure relates to a gas turbine engine component assembly. More particularly, the disclosure relates to a ceramic attachment used, for example, for blades or vanes that include at least one ceramic portion, such as a ceramic matrix composite, secured to another portion.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

Ceramic matrix composite (CMC) materials have been proposed for high-temperature applications, such as blades and vanes, in the turbine section as the industry pursues higher maximum temperature engine designs. Some applications subject the hardware to significant mechanical loads.

A gas turbine engine component assembly having the features of the preamble of claim 1 is disclosed in US 7510372 B1. A further gas turbine component assembly is disclosed in US 6648597 B1. A further gas turbine engine CMC assembly is disclosed in US 2005/254942 A1.

### SUMMARY

The present invention provides a gas turbine engine component assembly as set forth in claim 1.

In a further embodiment of any of the above, the first portion is constructed from a ceramic matrix composite.

In a further embodiment of any of the above, the second portion is constructed from a ceramic matrix composite.

In a further embodiment, the first and second portions are constructed from a ceramic matrix composite.

In a further embodiment of any of the above, the keeper is constructed from a ceramic matrix composite.

In a further embodiment, each of the first and second portions and the keeper are constructed from a ceramic matrix composite.

In an alternative embodiment, at least one of the first and second portions and the keeper is constructed from a metal alloy.

In a further embodiment of any of the above, the first portion is an airfoil and the second portion is a shroud.

In a further embodiment of any of the above, the first portion extends in a longitudinal direction. The first and second angled surfaces are canted in the same direction with respect to the longitudinal direction.

In a further embodiment of any of the above, the longitudinal direction corresponds to a direction of the pulling load.

In a further embodiment of any of the above, the second portion an airfoil and the first portion is a shroud.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a schematic perspective view of a gas turbine engine component assembly illustrating a ceramic attachment using a keeper.
Figure 3 is a cross-sectional view of the gas turbine engine component shown in Figure 2.
Figure 4 is a schematic perspective view of an example airfoil assembly using the ceramic attachment.

### DETAILED DESCRIPTION

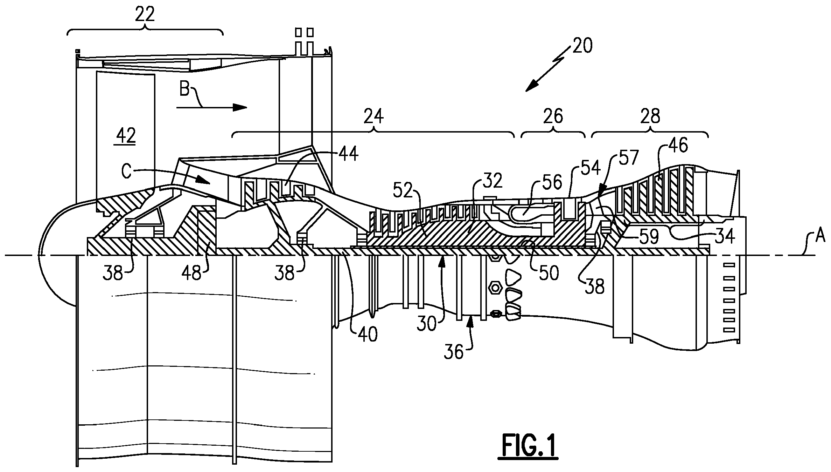

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high-pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low-pressure turbine to drive a fan via a gearbox, an intermediate spool that enables an intermediate-pressure turbine to drive a first compressor of the compressor section, and a high spool that enables a high-pressure turbine to drive a high-pressure compressor of the compressor section.

The example engine 20 generally includes a low-speed spool 30 and a high-speed spool 32 mounted for rotation about an engine central longitudinal axis X relative to an engine static structure 36 via several bearing systems 38. It should be understood that various bearing systems 38 at various locations may alternatively or additionally be provided.

The low-speed spool 30 generally includes an inner shaft 40 that connects a fan 42 and a low-pressure (or first) compressor section 44 to a low-pressure (or first) turbine section 46. The inner shaft 40 drives the fan 42 through a speed change device, such as a geared architecture 48, to drive the fan 42 at a lower speed than the low-speed spool 30. The high-speed spool 32 includes an outer shaft 50 that interconnects a high-pressure (or second) compressor section 52 and a high-pressure (or second) turbine section 54. The inner shaft 40 and the outer shaft 50 are concentric and rotate via the bearing systems 38 about the engine central longitudinal axis X.

A combustor 56 is arranged between the high-pressure compressor 52 and the high-pressure turbine 54. In one example, the high-pressure turbine 54 includes at least two stages to provide a double-stage high-pressure turbine 54. In another example, the high-pressure turbine 54 includes only a single stage. As used herein, a "high-pressure" compressor or turbine experiences a higher pressure than a corresponding "low-pressure" compressor or turbine.

The example low-pressure turbine 46 has a pressure ratio that is greater than about five (5). The pressure ratio of the example low-pressure turbine 46 is measured prior to an inlet of the low-pressure turbine 46 as related to the pressure measured at the outlet of the low-pressure turbine 46 prior to an exhaust nozzle.

A mid-turbine frame 57 of the engine static structure 36 is arranged generally between the high-pressure turbine 54 and the low-pressure turbine 46. The mid-turbine frame 57 further supports bearing systems 38 in the turbine section 28 as well as setting airflow entering the low-pressure turbine 46.

The core airflow C is compressed by the low-pressure compressor 44 then by the high-pressure compressor 52 mixed with fuel and ignited in the combustor 56 to produce high-speed exhaust gases that are then expanded through the high-pressure turbine 54 and low-pressure turbine 46. The mid-turbine frame 57 includes vanes 59, which are in the core airflow path and function as an inlet guide vane for the low-pressure turbine 46. Utilizing the vane 59 of the mid-turbine frame 57 as the inlet guide vane for low-pressure turbine 46 decreases the length of the low-pressure turbine 46 without increasing the axial length of the mid-turbine frame 57. Reducing or eliminating the number of vanes in the low-pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low-pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition-typically cruise at about 0.8 Mach and about 35,000 feet (10,668 m). The flight condition of 0.8 Mach and 35,000 ft. (10,668 m), with the engine at its best fuel consumption-also known as "bucket cruise Thrust Specific Fuel Consumption ('TSFC')"-is the industry-standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry-standard temperature correction of [(Tᵣₐₘ °R) / (518.7 °R)]^{0.5} (°R = °K x 9/5). The "low corrected fan tip speed", as disclosed herein according to one non-limiting embodiment, is less than about 1150 ft/second (350.5 m/s).

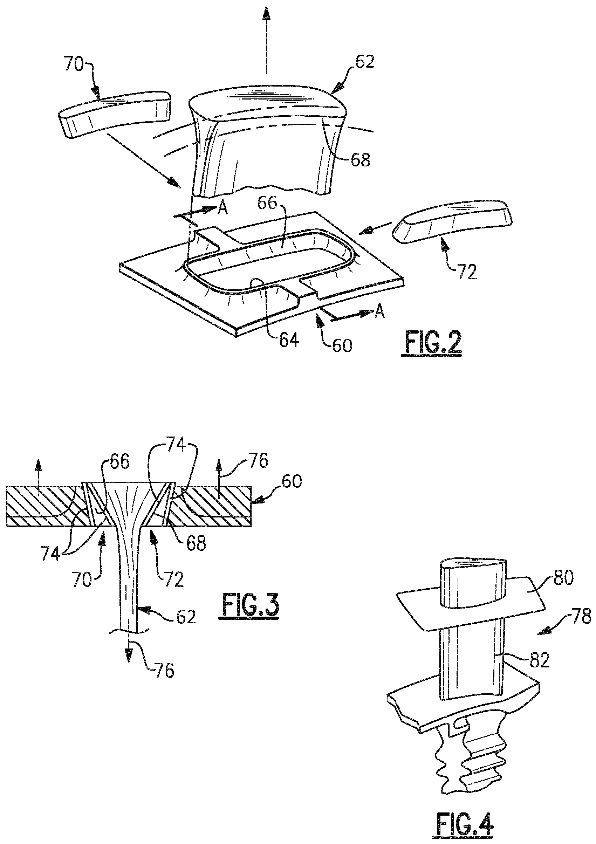

Referring to Figures 2 and 3, a component assembly is shown for bonding ceramic material in a manner that withstands high pulling loads, for example, from centrifugal forces. The component assembly is a gas turbine engine component, for example, a blade, vane, blade outer air seal, combustor liner, exhaust liner or other component exposed to high temperatures within a gas turbine engine.

Generally, the component assembly includes first and second portions 60, 62. At least one of the first and second portions 60, 62 is a ceramic material, such as ceramic matrix composite (CMC). The first portion 60 includes an aperture 64 having a first angled surface 66. In the example, the aperture 64 is circumscribed by continuous, unbroken structure provided by the first portion 60, such that the second portion 62 is disposed within the aperture 64 by inserting the first portion 60 through the aperture 64. The second portion 62 includes a second angled surface 68 adjacent to the first angled surface 66.

The first and second angled surfaces 66, 68 are configured to lock the first and second portions 60, 62 in a wedge-like manner under a pulling load 76. The first portion 60 extends in a longitudinal direction. The first and second angled surfaces 66, 68 are canted in the same direction with respect to the longitudinal direction, which corresponds to a direction of the pulling load 76 in the example.

In the example shown in Figure 2, the shape of the aperture 64 and/or the profile of the second portion 62 necessitates a clearance between the first and second portions 60, 62 to facilitate assembly. In such an example, one or more keepers are used to take up the clearance and lock the first and second portions 60, 62 to one another. In the example shown, first and second keepers 70, 72 are arranged in the aperture 64 between the first and second portions 60, 62, best shown in Figure 3.

A bond 74 operatively secures the first and second angled surfaces 66, 68 to one another to secure the assembly under shear forces. The wedge interface between the components provides additional compressive loads that further lock the components to one another, which supplements the bond in applications where the bonding material might be insufficient.

In the example shown in Figures 2 and 3, the first and second keepers 70, 72 are disposed between the bond 74 and the first and second angled surfaces 66, 68 to indirectly secure the first and second portions 60, 62 to one another in a wedged interface.

The bond74 is a transient liquid phase bond and/or a partial transient liquid phase bond. One or more of the first and second portions 60, 62 and the first and second keepers 70, 72 are constructed from the ceramic matrix composite. If desired, at least one of the first and second portions 60, 62 and the first and second keepers 70, 72 are constructed from a metal alloy, such as a nickel alloy, to provide strength in applications in which a ceramic material may be inadequate.

The bonding material that produces bond 74 is a material that results in a solid bond by the process of transient liquid phase (TLP) or partial transient liquid phase (PTLP) bonding. Transient liquid phase (TLP) and partial transient liquid phase (PTLP) bonding are described in detail in Grant O Cook III et al "Overview of Transient Liquid Phase and Partial Transient Liquid Phase Bonding", J. Mater. Sci. (2011) 46:5305-5323 (referred to as "the article"). In PTLP bonding, bonding material may be a multilayer structure comprising thin layers of low-melting-point metals or alloys placed on each side of a much thicker layer of a refractory metal or alloy core. Upon heating to a bonding temperature, a liquid is formed via either direct melting of a lower-melting layer or a eutectic reaction of a lower-melting layer with the refractory metal layer. The liquid that is formed wets each ceramic substrate while also diffusing into the refractory layer. During the process, the liquid regions solidify isothermally and homogenization of the entire bond region leads to a solid refractory bond.

Example bond alloy layers (separated by pipe characters) for bonding silicon carbide to silicon carbide fiber reinforced silicon carbide (SiC/SiC) or to silicon carbide fiber reinforced silicon nitrogen carbide (SiC/SiNC) are C | Si | C, Cu-Au-Ti | Ni | Cu-Au-Ti, and Ni-Si | Mo | Ni-Si multilayer metal structures.

Example bond alloy layers for bonding silicon nitride to silicon carbide fiber reinforced silicon carbide (SiC/SiC) or silicon carbide fiber reinforced silicon nitrogen carbide (SiC/SiNC) are Al|Ti|Al, Au|Ni-Cr|Au, Cu-Au|Ni|Cu-Au, Co|Nb|Co, Co| Ta|Co, Co|Ti|Co, Co|V|Co, Cu-Ti|Pd|Cu-Ti, and Ni|V|Ni multilayer metal structures.

Additional example bond alloy layers include non-symmetric multilayer metal structures, such as Cu-Au-Ti|Ni|Cu-Au, Au|Ni-Cr|Cu-Au, Au|Ni-Cr|Cu-Au-Ti, and Al|Ti|Co. These non-symmetric structures can accommodate for differences in wetting characteristics between the ceramic material and the CMC material.

It should be understood that other bonding materials can be used according to the article and based upon the materials of the components to be bonded.

Referring to Figure 4, the component assembly is an airfoil assembly 78. The second portion corresponds to an airfoil 82, and the first portion corresponds to a shroud 80. The shroud 80 includes the aperture having the first angled surface, and the airfoil 82 is disposed within the aperture and includes the second angled surface. The airfoil 82 and the shroud 80 are locked to one another under a pulling load, as described above in relation to Figures 2 and 3.

Although example embodiments have been disclosed, a worker of ordinary skill in this art would recognize that certain modifications would come within the scope of the claims. For that and other reasons, the following claims should be studied to determine their true scope and content.

## Claims

1. A gas turbine engine component assembly comprising:
first and second portions (60,62), the first portion (60) includes an aperture (64) having a first angled surface (66), the second portion (62) is disposed within the aperture (64) and includes a second angled surface (68) adjacent to the first angled surface (66), the first and second angled surfaces (66,68) locking the first and second portions (60,62) to one another under a pulling load (76);
wherein said pulling load (76) is one which acts in a direction which tends to pull one of said first and second angled surfaces (66, 68) towards the other of said first and second angled surfaces (66, 68); the assembly further comprising:
a keeper (70,72) disposed between the first and second angled surfaces (66,68) to indirectly secure the first and second portions (60,62) to one another in a wedged interface, and a bonding material (74) operatively securing the first and second angled surfaces (66, 68) to the keeper, **characterized in that**:
at least one of the first and second portions (60,62) is constructed from a ceramic material and
at least one of the first and second portions (60,62) are bonded to one another using a transient liquid phase bond or a partial transient liquid phase bond.

2. The gas turbine engine component assembly according to claim 1, wherein the first portion (60) is constructed from a ceramic matrix composite.

3. The gas turbine engine component assembly according to claim 1, wherein the second portion (62) is constructed from a ceramic matrix composite.

4. The gas turbine engine component assembly according to any preceding claim, wherein the first and second portions (60,62) are constructed from a ceramic matrix composite.

5. The gas turbine engine component assembly according to any preceding claim, wherein the keeper (70,72) is constructed from a ceramic matrix composite.

6. The gas turbine engine component assembly according to any of claims 1 to 4, wherein at least one of the first and second portions (60,62) and the keeper (70,72) is constructed from a metal alloy.

7. The gas turbine engine component assembly according to any of claims 1 to 4, wherein each of the first and second portions (60,62) and the keeper (70,72) are constructed from a ceramic matrix composite.

8. The gas turbine engine component assembly according to any preceding claim, wherein the first portion (60) is a shroud and the second portion (62) is an airfoil.

9. The gas turbine engine component assembly according to any preceding claim, wherein the first portion (60) extends in a longitudinal direction, the first and second angled surfaces (66,68) are canted in the same direction with respect to the longitudinal direction, wherein the longitudinal direction corresponds to a direction of the pulling load.

## Patentansprüche

1. Gasturbinenmotor-Komponentenbaugruppe, umfassend:
einen ersten und zweiten Abschnitt (60, 62), wobei der erste Abschnitt (60) eine Öffnung (64) mit einer ersten abgewinkelten Fläche (66) aufweist, der zweite Abschnitt (62) innerhalb der Öffnung (64) angeordnet ist und eine zweite abgewinkelte Fläche (68) angrenzend an die erste abgewinkelten Fläche (66) aufweist, wobei die erste und zweite abgewinkelte Fläche (66, 68) den ersten und den zweiten Abschnitt (60, 62) bei einer Zuglast (76) miteinander verriegeln;
wobei die Zuglast (76) eine ist, die in einer Richtung wirkt, die dazu neigt, eine der ersten und der zweiten abgewinkelten Fläche (66, 68) in Richtung der anderen der ersten und der zweiten abgewinkelten Fläche (66, 68) zu ziehen; die Baugruppe ferner umfassend:
einen Halter (70, 72), der zwischen der ersten und der zweiten abgewinkelten Fläche (66, 68) angeordnet ist, um den ersten und den zweiten Abschnitt (60, 62) in einer Keilschnittstelle indirekt aneinander zu befestigen, und ein Verbindungsmaterial (74), das die erste und zweite abgewinkelte Fläche (66, 68) wirksam an dem Halter befestigt, **dadurch gekennzeichnet, dass**:
mindestens einer des ersten und des zweiten Abschnitts (60, 62) aus einem Keramikmaterial hergestellt ist und mindestens einer des ersten und zweiten Abschnitts (60, 62) unter Verwendung einer vorübergehenden Flüssigphasenbindung oder einer teilweise vorübergehenden Flüssigphasenbindung miteinander verbunden werden.

2. Gasturbinenmotor-Komponentenbaugruppe nach Anspruch 1, wobei der erste Abschnitt (60) aus einem Keramikmatrix-Verbundwerkstoff hergestellt ist.

3. Gasturbinenmotor-Komponentenbaugruppe nach Anspruch 1, wobei der zweite Abschnitt (62) aus einem Keramikmatrix-Verbundwerkstoff gefertigt ist.

4. Gasturbinenmotor-Komponentenbaugruppe nach einem der vorhergehenden Ansprüche, wobei der erste und der zweite Abschnitt (60, 62) aus einem Keramikmatrix-Verbundwerkstoff hergestellt sind.

5. Gasturbinenmotor-Komponentenbaugruppe nach einem der vorhergehenden Ansprüche, wobei der Halter (70, 72) aus einem Keramikmatrix-Verbundwerkstoff hergestellt ist.

6. Gasturbinenmotor-Komponentenbaugruppe nach einem der Ansprüche 1 bis 4, wobei mindestens einer des ersten und des zweiten Abschnitts (60, 62) und der Halter (70, 72) aus einer Metall-Legierung hergestellt sind.

7. Gasturbinenmotor-Komponentenbaugruppe nach einem der Ansprüche 1 bis 4, wobei jeder des ersten und des zweiten Abschnitts (60, 62) und der Halter (70, 72) aus einem Keramikmatrix-Verbundwerkstoff hergestellt sind.

8. Gasturbinenmotor-Komponentenbaugruppe nach einem der vorhergehenden Ansprüche, wobei der erste Abschnitt (60) eine Verkleidung ist und der zweite Abschnitt (62) eine Turbinenschaufel ist.

9. Gasturbinenmotor-Komponentenbaugruppe nach einem der vorhergehenden Ansprüche, wobei sich der erste Abschnitt (60) in einer Längsrichtung erstreckt, die erste und die zweite abgewinkelte Fläche (66, 68) in der gleichen Richtung in Bezug auf die Längsrichtung abgeschrägt sind, wobei die Längsrichtung einer Richtung der Zuglast entspricht.

## Revendications

1. Ensemble d'éléments de moteur à turbine à gaz, comprenant :
des première et seconde parties (60, 62), la première partie (60) inclut une ouverture (64) ayant une première surface inclinée (66), la seconde partie (62) est disposée au sein de l'ouverture (64) et inclut une seconde surface inclinée (68) adjacente à la première surface inclinée (66), les première et seconde surfaces inclinées (66, 68) verrouillant les première et seconde parties (60, 62) l'une à l'autre sous une charge de traction (76) ;
dans lequel ladite charge de traction (76) est une charge qui agit dans une direction qui tend à tirer l'une desdites première et seconde surfaces inclinées (66, 68) vers l'autre desdites première et seconde surfaces inclinées (66, 68) ;
l'ensemble comprenant en outre :
un arrêtoir (70, 72) disposé entre les première et seconde surfaces inclinées (66, 68) pour fixer indirectement les première et seconde parties (60, 62) l'une à l'autre dans une interface cunéiforme, et un matériau de liaison (74) fixant de manière fonctionnelle les première et seconde surfaces inclinées (66, 68) à l'arrêtoir, **caractérisé en ce que** :
au moins l'une des première et seconde parties (60, 62) est construite à partir d'un matériau céramique et au moins l'une des première et seconde parties (60, 62) est liée à l'autre à l'aide d'une liaison en phase liquide transitoire ou d'une liaison en phase liquide transitoire partielle.

2. Ensemble d'éléments de moteur à turbine à gaz selon la revendication 1, dans lequel la première partie (60) est construite à partir d'un composite à matrice céramique.

3. Ensemble d'éléments de moteur à turbine à gaz selon la revendication 1, dans lequel la seconde partie (62) est construite à partir d'un composite à matrice céramique.

4. Ensemble d'éléments de moteur à turbine à gaz selon une quelconque revendication précédente, dans lequel les première et seconde parties (60, 62) sont construites à partir d'un composite à matrice céramique.

5. Ensemble d'éléments de moteur à turbine à gaz selon une quelconque revendication précédente, dans lequel l'arrêtoir (70, 72) est construit à partir d'un composite à matrice céramique.

6. Ensemble d'éléments de moteur à turbine à gaz selon l'une quelconque des revendications 1 à 4, dans lequel au moins l'un des première et seconde parties (60, 62) et de l'arrêtoir (70, 72) est construit à partir d'un alliage de métal.

7. Ensemble d'éléments de moteur à turbine à gaz selon l'une quelconque des revendications 1 à 4, dans lequel chacune des première et seconde parties (60, 62) et l'arrêtoir (70, 72) sont construits à partir d'un composite à matrice céramique.

8. Ensemble d'éléments de moteur à turbine à gaz selon une quelconque revendication précédente, dans lequel la première partie (60) est un carénage et la seconde partie (62) est une surface portante.

9. Ensemble d'éléments de moteur à turbine à gaz selon une quelconque revendication précédente, dans lequel la première partie (60) s'étend dans une direction longitudinale, les première et seconde surfaces inclinées (66, 68) sont inclinées dans la même direction par rapport à la direction longitudinale, dans lequel la direction longitudinale correspond à une direction de la charge de traction.
